# FASCICULE DE BREVET EUROPEEN

(11) **EP 0 770 009 B1**
(45) Date de publication et mention de la délivrance du brevet: **29.09.1999**
(21) Numéro de dépôt: 95926987.9
(22) Date de dépôt: 27.07.1995
(51) Int. Cl.: B60K 23/08, F16H 48/20

(54) **DISPOSITIF DE LIAISON MECANIQUE ADAPTABLE A TOUT ELEMENT TOURNANT AVEC STABILISATEUR AUTO-CONTROLE**
MECHANISCHE, AN BELIEBIGE DREHELELMENTE ANPASSBARE VERBINDUNGSVORRICHTUNG MIT SELBSTREGULIERENDEM STABILISATOR
MECHANICAL LINKAGE DEVICE WITH SELF-REGULATING STABILIZER SUITABLE FOR ANY ROTATING ELEMENT

(30) Priorité: 01.08.1994 FR 9409731
(43) Date de publication de la demande: 02.05.1997
(73) Titulaire: Guilbard, Paul, F-86130 Jaunay-Clan (FR)
(72) Inventeur: Guilbard, Paul, F-86130 Jaunay-Clan (FR)
(74) Mandataire: Thébault, Jean-Louis
(86) Numéro de dépôt international: FR9501017
(87) Numéro de publication internationale: WO9604148

(56) Documents cités:
- EP-A- 0 308 312
- DE-A- 3 330 549
- DE-C- 3 545 545
- FR-A- 2 322 757
- GB-A- 2 148 416
- US-A- 5 103 690

## Description

La présente invention a pour objet un dispositif de liaison mécanique adaptable à tout élément tournant. Il offre la possibilité d'associer le couple d'un mouvement à son palier dès qu'il entre en action, pour contrôler plus précisément sa rotation et d'en augmenter son rendement.

Jusqu'alors, le couple circulant pose un problème de réaction sur les transmissions plus ou moins longues du fait qu'il lui faut un point d'appui pour se manifester.

Ce dispositif vise précisément à stabiliser le couple à un endroit déterminé. Il permet à la fois de remplir la fonction d'équilibreur et de contrôler les réactions de façon plus ou moins efficace en fonction de sa conception, de ses dimensions et de sa localisation.

On sait que la rotation d'un élément tournant par rapport à un support est rendue possible par des moyens qui suppriment les frottements, ce qui est le cas pour les roulements ou pour les bagues auto-lubrifiées ou bien encore pour les bagues en bain d'huile.

Si l'on prend un arbre maintenu par deux paliers solidaires d'un bâti et entraîné en rotation, on constate qu'il n'existe aucune liaison du mouvement entre le châssis et l'arbre si ce n'est un guidage par les paliers dont le but est de maintenir en place ledit arbre.

Durant sa rotation, que ce soit durant l'accélération, la décélération ou en vitesse de rotation stabilisée, l'arbre est indépendant du bâti.

On sait, par ailleurs, que les arbres en rotation subissent une flexion d'autant plus importante que les paliers sont éloignés, que l'arbre a un petit diamètre par rapport à la portée, que l'arbre présente un défaut d'équilibrage important.

Ceci conduit notamment à une usure prématurée des paliers, à des vibrations préjudiciables aux pièces de liaison à entraîner.

Dans un véhicule très simplifié comprenant un châssis monté sur quatre roues indépendantes et muni de moyens de propulsion indépendants des roues, on sait que dès que l'une des roues rencontre des conditions d'adhérence différentes, cette roue provoque une réaction sur le châssis.

Ainsi durant son déplacement, lorsque le véhicule a une roue en appui sur le sable par exemple et l'autre sur le macadam, ce véhicule a tendance à perdre sa stabilité car la roue passant sur le sable voit sa vitesse de rotation ralentie par rapport aux autres roues et notamment à la roue située sur le même train.

On constate que les roues sont indépendantes en rotation les unes des autres et notamment qu'elles ne sont pas liées à la vitesse de déplacement du châssis par rapport au sol sur lequel se déplace le véhicule.

Ainsi, une roue peut tourner plus vite que la vitesse de déplacement du châssis par rapport au sol, c'est le patinage ou moins vite, c'est le blocage.

Dans les deux cas, il y a perte d'adhérence de la roue au contact du sol, avec les difficultés de reprise de contrôle que cela représente.

Si le véhicule comprend des moyens d'entraînement d'au moins un train de roues, le problème qui se pose est le même, mais il est masqué par d'autres difficultés.

En effet, généralement, tout véhicule qui présente un train de roues motrices possède un différentiel interposé entre les roues motrices de façon que le véhicule puisse suivre la courbe des virages de façon plus progressive.

Le différentiel a un rôle bien précis qui est celui de compenser la différence de vitesse en rotation de la roue intérieure par rapport à la roue extérieure.

On remarque que l'arbre moteur entraîne une grande couronne solidaire en rotation d'un boîtier différentiel dans lequel est bloqué un croisillon recevant des satellites montés libres en rotation qui coopèrent avec des planétaires solidaires de l'extrémité interne de chacun des arbres de roues, eux-mêmes montés libres en rotation grâce à des roulements.

L'extrémité externe de chacun des arbres est également montée libre en rotation par rapport au châssis grâce à des paliers.

Chaque extrémité libre de l'arbre porte l'une des roues motrices.

On constate de nouveau que les roues motrices ne sont pas liées lors de leur rotation au châssis.

Le différentiel a un rôle d'amplificateur-compensateur mais ne permet aucune liaison précise du mouvement en rotation des roues avec la vitesse de déplacement du véhicule par rapport au sol.

Cette absence de liaison est responsable du manque de sécurité des véhicules, comme le montre l'exemple suivant.

Un véhicule automobile à deux roues motrices et deux roues traînées se déplace sur une roue revêtue de macadam.

Lorsque le véhicule suit une courbe, le différentiel absorbe la différence de vitesse de la roue intérieure par rapport à la roue extérieure car les planétaires vont pouvoir se décaler angulairement l'un par rapport à l'autre, ceci par rotation des satellites.

Le couple présente déjà une répartition différente sur les deux roues car l'une adhère mieux que l'autre sur le macadam.

Cet écart de répartition de couple est encore plus flagrant lorsque le véhicule se déplace sur un revêtement en macadam, en ligne droite, et que les roues d'un même côté rencontrent une plaque de neige par exemple qui modifie donc l'adhérence de ces roues.

Le couple est réparti de façon très dissymétrique essentiellement sur la roue motrice qui a le moins d'adhérence.

Cette roue patine, c'est-à-dire que la vitesse de rotation de la roue est supérieure à la vitesse théorique que cette roue devrait avoir en fonction de la vitesse de déplacement de ce véhicule par rapport au sol, compte tenu de son développement.

Dès que les roues du véhicule roulant sur la neige retrouvent le macadam, le coefficient d'adhérence augmente brutalement et il y a éventuellement un patinage très bref mais dans tous les cas, le véhicule est déséquilibré.

Plus les paramètres, vitesse, poids du véhicule, écart d'adhérence sont maximalisés et plus les risques sont importants.

Le but de l'invention est de proposer un dispositif de liaison en mouvement d'un élément tournant avec le support sur lequel il est monté tournant qui se caractérise en ce qu'il comprend au moins une couronne, solidaire du support et au moins un pignon, monté libre en rotation autour d'un axe solidaire de l'élément tournant, prévu pour coopérer avec la couronne par engrènement.

Plus particulièrement, le dispositif comprend trois pignons montés libres en rotation chacun autour d'un axe solidaire de l'élément tournant et répartis à 120° les uns des autres.

Selon une application particulière du dispositif à un véhicule équipé de roues montées libres en rotation par rapport au châssis de ce véhicule, il est prévu pour chacune des roues, motrice ou tirée, un ensemble couronne/pignons de conception standard, la couronne étant montée fixe par rapport au châssis et le ou les pignons étant montés libres en rotation sur ou des axes solidaires de l'arbre de roue correspondant.

De façon préférentielle, la couronne et le ou les pignons sont placés à proximité immédiate de la roue portée par l'arbre.

Plus particulièrement, la couronne et le ou les pignons sont placés au droit du moyeu de roue.

Selon une autre application du dispositif, cette fois à un arbre de transmission monté sur des paliers solidaires d'un bâti, la couronne est solidaire du bâti et le ou les pignons sont montés à rotation sur des axes solidaires de cet arbre et la couronne et le ou les pignons sont disposés à proximité immédiate des paliers.

Un mode de réalisation propose de disposer l'ensemble de la couronne et du ou des pignons dans un boîtier étanche contenant un lubrifiant.

Le dispositif est maintenant décrit en regard des dessins annexés sur lesquels :
- la figure 1 représente une vue schématique d'un véhicule à quatre roues dont deux motrices avec un différentiel, équipé du dispositif selon l'invention,
- la figure 2A représente une vue en coupe transversale de détail d'un mode de réalisation du dispositif de liaison selon l'invention,
- la figure 2B représente une vue en coupe longitudinale du dispositif selon l'invention,
- la figure 3 représente une vue de détail du dispositif monté sur un arbre de roue, et
- la figure 4 représente une vue d'une application du dispositif selon l'invention à un arbre tournant.

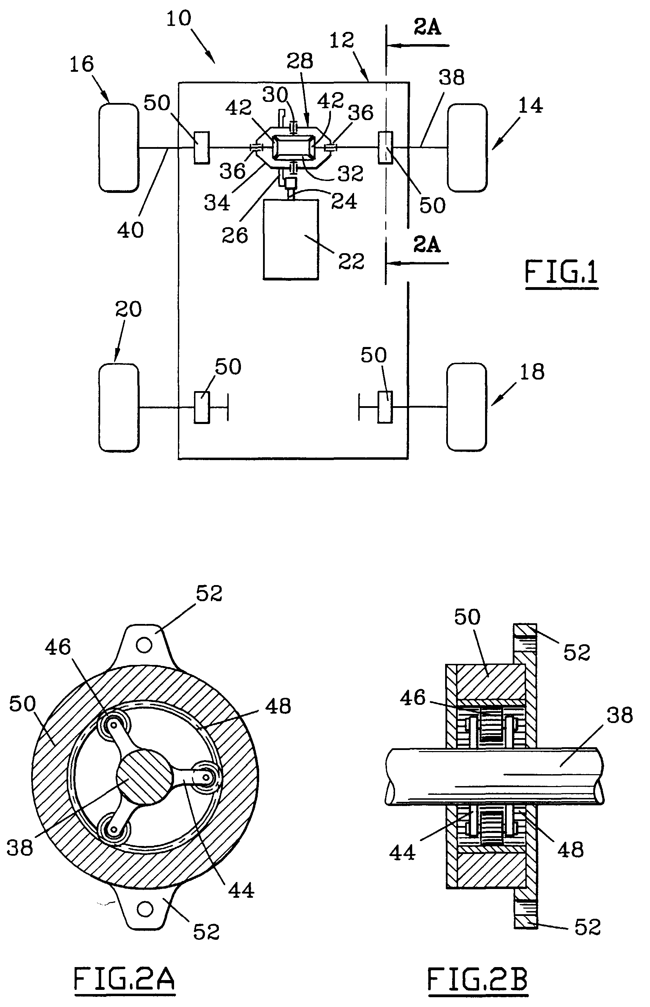

Sur la figure 1, on a représenté un véhicule 10 comprenant un châssis 12, deux roues avant motrices droite 14 et gauche 16, deux roues arrière tirées, droite 18 et gauche 20.

Le moteur du véhicule est référencé 22 et son arbre d'entraînement 24.

Cet arbre d'entraînement 24 entraîne à son tour une couronne 26 d'un différentiel 28.

Le différentiel comprend de façon connue un croisillon portant des satellites 32, solidaire en rotation d'un boîtier 34, lui-même monté à rotation par des roulements 36 sur les deux arbres 38 et 40 des roues 14 et 16.

Les satellites 32 coopèrent avec des planétaires 42 portés par les extrémités des arbres de roues.

Le dispositif de liaison selon l'invention comprend ainsi que cela est représenté sur la figure 2A des chapes 44 solidaires de l'arbre de roue 38 entre lesquelles sont montés libres en rotation des pignons 46.

Le dispositif comprend en outre une couronne 48 immobilisée dans un carter 50 étanche fixé par des pattes 52 au châssis 12 par l'intermédiaire des bras de suspension.

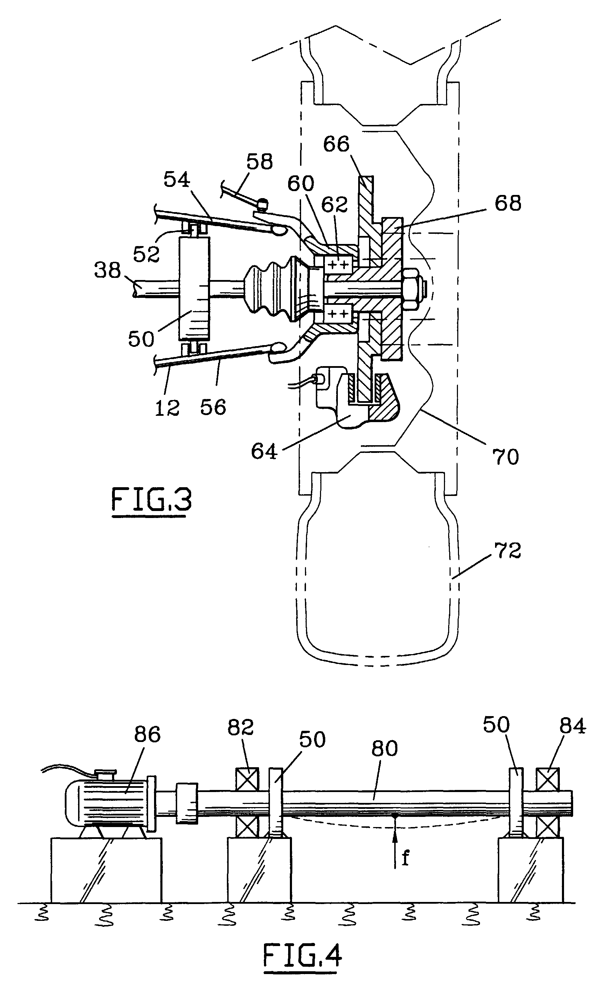

Sur la figure 3, on a représenté les bras de suspension supérieur 54 et inférieur 56, les commandes de direction 58, le bloc porte-fusée 60, le roulement 62 dans lequel tourne l'arbre 38, l'étrier de frein 64, le disque de frein 66, la platine et la fixation 68 de la jante 70 supportant le pneu 72.

Le carter 50 est fixé au porte-fusée 60, autour de l'arbre de roue et au plus proche de la roue.

Le fonctionnement du dispositif selon l'invention est maintenant décrit en détail à partir de ces figures.

Sur un véhicule non équipé du dispositif selon l'invention, dès que le véhicule se déplace sur une chaussée recouverte de macadam, le moteur 22 transmet le couple généré au différentiel qui le répartit pour moitié vers chacune des roues motrices 14 et 16.

Ainsi la couronne 26 est entraînée en rotation, elle entraîne le boîtier 34, le croisillon 30, les satellites 32 et les planétaires 42 solidaires des arbres 38 et 40 de roues.

Les roues arrières 18 et 20 sont tirées.

Si les roues droites 14 et 18 roulent sur un revêtement moins adhérent, par exemple du macadam recouvert de neige, la roue avant 14 patine, d'autant plus que 1e véhicule est en accélération tandis que la roue 18 se stabilise.

En effet, le couple est dérivé par le différentiel vers la roue qui présente la plus faible adhérence.

La roue 16 qui adhère, offre un effort résistant qui maintient le planétaire 42 de l'arbre 40 correspondant à une vitesse constante qui est la vitesse théorique à laquelle il doit tourner en fonction de la vitesse du véhicule et du développement du pneu de la roue.

Par contre, le planétaire 42 de l'arbre 38, par le manque d'adhérence, peut tourner plus vite, le différentiel compensant la différence de vitesse de rotation des arbres par rotation des satellites 32 sur eux-mêmes.

C'est là que le dispositif de l'invention intervient.

En effet, la roue 14 qui devrait être mise en survitesse de rotation est maintenue à une vitesse constante ce qui évite le patinage.

L'arbre 38 de roue qui entraîne en rotation les pignons 46 est régulé en rotation car les pignons coopèrent avec la grande couronne par engrènement, ce qui conduit à une réaction de régulation différente de celle du seul roulement

Il en est de même pour la roue arrière 18 qui est régulée en rotation.

On remarque par contre que lorsque le véhicule se déplace et suit une courbe, le différentiel absorbe la différence de vitesse comme il le fait normalement sans perturbation par le dispositif de l'invention. Le couple se trouve auto-régulé par les dispositifs de l'invention de même conception disposés sur toutes les roues.

En effet, le couple est mieux réparti puisque l'engrènement des pignons avec la grande couronne provoque un effet résistant qui régule lors de l'augmentation de la diminution du couple.

On constate que les roues sont amenées à se déplacer en rotation à la vitesse exacte à laquelle elles doivent se déplacer en fonction de la vitesse du véhicule par rapport au sol, compte tenu du développement du pneu.

La vitesse linéaire développée par la roue est égale en permanence à la vitesse de déplacement du véhicule par rapport au sol.

Il ne peut donc pas se produire de patinage.

L'adhérence est toujours maximale pour un couple donné à proximité de la roue et du sol.

La description qui vient d'être faite l'a été lorsque le véhicule est en accélération ou au moins en effort de traction.

Le même phénomène avec le dispositif selon l'invention se produit lors de la décélération.

Les roues ralentissent uniformément en fonction de la vitesse du véhicule lorsque le conducteur actionne la pédale de frein.

Par contre, si l'effort de freinage est trop intense, les roues arrivent à se bloquer mais toutes ensembles.

Le dispositif se comporte comme si les roues étaient reliées dans leur mouvement en rotation à une même référence qui est le châssis du véhicule, lui-même en déplacement.

De ce fait, le poids du véhicule en déplacement joue un rôle important sur les possibilités du freinage. Le freinage devient plus progressif, plus précis, plus efficace et surtout équilibre.

On a remarqué également que plus le dispositif est placé près de la roue, meilleur est l'effet obtenu puisque le couple se trouve stabilisé près de son point d'utilisation.

Une autre application de cet effet de régulation concerne les arbres d'entraînement de moteur ou de liaison pour transférer le couple à un organe éloigné, ainsi que cela est représenté sur la figure 4.

Un arbre 80 étant monté à rotation entre deux paliers 82,84 tourne librement, entraîné par un moteur 86.

On s'aperçoit dès sa mise en rotation qu'il se produit une flèche f entre les paliers qui est due à un mauvais équilibre de cet arbre.

Ceci est d'autant plus sensible que l'arbre est mal équilibré ou que la vitesse augmente. Une telle flèche augmente ainsi en fonction des disproportions des diamètres d'arbres par rapport aux couples transmis.

Il suffit de placer au moins un dispositif de liaison en rotation 50 selon l'invention entre l'arbre et le bâti qui supporte les paliers pour réduire très sensiblement la flèche de cet arbre. Le contrôle de l'effet de la force centrifuge devient plus facile. Il peut s'améliorer en fonction des pièces utilisées suivant l'importance en volume de celle-ci.

Le résultat est d'autant plus accentué que le dispositif est placé à proximité d'un palier.

Dans ce type d'agencement, pour assurer un travail plus intense, on peut ajouter un pignon central ayant uniquement pour but de relier les autres pignons entre eux.

Ce pignon prend appui sur l'arbre par un pallier à position folle en translation au moyen d'un coussinet lubrifié par exemple, de manière à synchroniser tous les pignons ensemble.

La taille des pignons peut être droite ou oblique.

De même le nombre d'essieux par véhicule n'est pas limité, 1e système s'adaptant sur les essieux motorisés que sur les essieux traînés.

De plus, l'invention propose de disposer l'ensemble des pignons et couronnes dans un boîtier étanche formant carter mais en variante, ceux-ci peuvent être associés à des ensembles mécaniques existants tels que les nez et trompettes de pont, les moyeux, les boites de vitesses, de façon à en faciliter l'entretien et à diminuer 1'encombrement.

De ce fait, dans le mode de réalisation principal, le dispositif est placé près des roues pour améliorer l'adhérence et la répartition des charges mais ce mode n'est pas limitatif.

Bien entendu, sur un véhicule multi-essieux, l'un seulement des essieux peut être équipé, avec tous les avantages qu'il procure, du dispositif selon l'invention.

## Revendications

1. Dispositif de liaison en mouvement d'un élément tournant (38) avec le support (12) sur lequel il est monté tournant, caractérisé en ce qu'il comprend au moins une couronne (48), solidaire du support, et au moins un pignon (46), monté libre en rotation autour d'un axe solidaire de l'élément tournant, prévu pour coopérer avec la couronne par engrènement.

2. Dispositif selon la revendication 1, caractérisé en ce qu'il comprend trois pignons (46) montés libres en rotation chacun autour d'un axe solidaire de l'élément tournant et répartis à 120° les uns des autres.

3. Dispositif selon l'une quelconque des revendications précédentes, caractérisé en ce qu'il comprend une couronne (48) solidaire du support, un élément tournant (38) en deux parties, composé d'un premier et d'un second demi-élément, montés l'un et l'autre à rotation par rapport au support, le premier demi-élément comprenant une denture sur sa périphérie, des pignons montés en rotation sur des axes solidaires du second demi-élément, ces pignons coopérant d'une part, avec la denture du premier demi-élément et, d'autre part, avec la couronne solidaire du support.

4. Dispositif selon l'une quelconque des revendications précédentes, appliqué à un véhicule équipé de roues montées libres en rotation par rapport au châssis de ce véhicule, caractérisé en ce qu'il comprend pour chacune des roues (14,16,18,20), motrice ou tirée, un ensemble pignons/couronne (46,48), la couronne (48) étant montée fixe par rapport au châssis (12) et les pignons (46) étant montés libres en rotation sur des axes solidaires de l'arbre de roue correspondant.

5. Dispositif selon la revendication 4, caractérisé en ce que la couronne (48) et les pignons (46) sont placés à proximité immédiate de la roue portée par l'axe.

6. Dispositif selon la revendication 5, caractérisé en ce que la couronne (48) et les pignons (46) sont placés au droit du moyeu de roue.

7. Dispositif selon l'une quelconque des revendications 1 à 3, appliqué à un arbre de transmission (80) monté sur des paliers (82,84) solidaires d'un bâti, caractérisé en ce que la couronne est solidaire du bâti et le ou les pignons sont montés à rotation sur des axes solidaires de cet arbre (80) et en ce que la couronne et le ou les pignons sont disposés à proximité immédiate de l'un au moins des paliers.

8. Dispositif selon l'une quelconque des revendications précédentes, caractérisé en ce que l'ensemble de la couronne et du ou des pignons est disposé dans un boîtier étanche contenant un lubrifiant.

9. Dispositif selon l'une quelconque des revendications 1 à 7, caractérisé en ce qu'il est intégré dans un autre organe du véhicule, notamment dans la boîte à vitesses.

## Claims

1. Device for movingly connecting a rotating element (38) to the support (12) on which it is rotatably mounted, characterised in that it comprises at least one ring gear (48), secured to the support, at least one pinion (46), mounted so as to rotate freely about a spindle secured to the rotating element, designed to cooperate with the ring gear by meshing.

2. Device according to Claim 1, characterised in that it comprises three pinions (46) mounted so as to rotate freely each about a spindle secured to the rotating element and distributed at 120° from each other.

3. Device according to any one of the preceding claims, characterised in that it comprises a ring gear (48) secured to the support, a two-part rotating element (38) composed of first and second half-elements, mounted each so as to rotate with respect to the support, the first half-element comprising teeth on its periphery, pinions mounted so as to rotate on spindles secured to the second half-element, these pinions cooperating on the one hand with the teeth of the first half-element and on the other hand with the ring gear secured to the support.

4. Device according to any one of the preceding claims, applied to a vehicle equipped with wheels mounted so as to rotate freely with respect to the chassis of this vehicle, characterised in that it comprises, for each of the wheels (14, 16, 18, 20), driving or non-driving, a pinion/ring gear assembly (46, 48), the ring gear (48) being mounted so as to be fixed with respect to the chassis (12) and the pinions (46) being mounted so as to rotate freely on spindles secured to the corresponding wheel shaft.

5. Device according to Claim 4, characterised in that the ring gear (48) and pinions (46) are positioned in the immediate vicinity of the wheel carried by the spindle.

6. Device according to Claim 5, characterised in that the ring gear (48) and pinions (46) are positioned in line with the wheel hub.

7. Device according to any one of Claims 1 to 3, applied to a transmission shaft (80) mounted on bearings (82, 84) secured to a frame, characterised in that the ring gear is secured to the frame and the pinion or pinions are rotatably mounted on spindles secured to this shaft (80), and in that the ring gear and the pinion or pinions are disposed in the immediate vicinity of at least one of the bearings.

8. Device according to any one of the preceding claims, characterised in that the assembly consisting of the ring gear and pinion or pinions is disposed in a sealed casing containing a lubricant.

9. Device according to any one of Claims 1 to 7, characterised in that it is integrated into another component of the vehicle, notably into the gearbox.

## Patentansprüche

1. Vorrichtung zum beweglichen Verbinden eines drehbaren Elements (38) mit dem Träger (12), an dem es drehbar angebracht ist, dadurch gekennzeichnet, daß sie wenigstens einen Kranz (48), der mit dem Träger fest verbunden ist, sowie wenigstens ein Ritzel (46) umfaßt, das um eine mit dem drehbaren Element fest verbundene Achse frei drehbar angebracht und dazu vorgesehen ist, mit dem Kranz durch Zahneingriff zusammenzuwirken.

2. Vorrichtung nach Anspruch 1, dadurch gekennzeichnet, daß sie drei Ritzel (46) enthält, wovon jedes um eine mit dem drehbaren Element fest verbundene Achse frei drehbar angebracht und von den jeweils anderen um 120° beabstandet ist.

3. Vorrichtung nach einem der vorangehenden Ansprüche, dadurch gekennzeichnet, daß sie einen mit dem Träger fest verbundenen Kranz (48), ein drehbares Element (38) aus zwei Teilen, das aus einem ersten und einem zweiten Halbelement gebildet ist, die in bezug auf den Träger jeweils drehbar angebracht sind, wobei das erste Halbelement an seinem äußeren Umfang eine Zahnung aufweist, sowie Ritzel umfaßt, die an mit dem zweiten Halbelement fest verbundenen Achsen drehbar angebracht sind, wobei diese Ritzel einerseits mit der Zahnung des ersten Halbelements und andererseits mit dem mit dem Träger fest verbundenen Kranz zusammenwirken.

4. Vorrichtung nach einem der vorangehenden Ansprüche, die auf ein Fahrzeug angewendet wird, das mit Rädern ausgerüstet ist, die in bezug auf den Rahmen dieses Fahrzeugs frei drehbar angebracht sind, dadurch gekennzeichnet, daß sie für jedes der Räder (14, 16, 18, 20), die angetrieben oder geführt werden, eine Ritzel/Kranz-Einheit (46, 48) umfaßt, wobei der Kranz (48) in bezug auf den Rahmen (12) fest angebracht ist und die Ritzel (46) an den mit der Welle des entsprechenden Rades fest verbundenen Achsen frei drehbar angebracht sind.

5. Vorrichtung nach Anspruch 4, dadurch gekennzeichnet, daß der Kranz (48) und die Ritzel (46) in unmittelbarer Nähe des von der Achse getragenen Rades angeordnet sind.

6. Vorrichtung nach Anspruch 5, dadurch gekennzeichnet, daß der Kranz (48) und die Ritzel (46) in der Verlängerung der Nabe des Rades angeordnet sind.

7. Vorrichtung nach einem der Ansprüche 1 bis 3, die auf eine Kraftübertragungswelle (80) angewendet wird, die an mit einem Rahmen fest verbundenen Lagern (82, 84) angebracht ist, dadurch gekennzeichnet, daß der Kranz mit dem Rahmen fest verbunden ist und das oder die Ritzel an mit dieser Welle (80) fest verbundenen Achsen drehbar angebracht sind und daß der Kranz und das oder die Ritzel in unmittelbarer Nähe wenigstens eines dieser Lager angeordnet sind.

8. Vorrichtung nach einem der vorangehenden Ansprüche, dadurch gekennzeichnet, daß die Einheit aus dem Kranz und dem oder den Ritzeln in einem ein Schmiermittel enthaltenden dichten Gehäuse angeordnet sind.

9. Vorrichtung nach einem der Ansprüche 1 bis 7, dadurch gekennzeichnet, daß sie in ein anderes Element des Fahrzeugs, insbesondere in das Getriebe, integriert ist.
